# EUROPÄISCHE PATENTSCHRIFT

(11) **EP 2 943 748 B1**
(45) Veröffentlichungstag und Bekanntmachung des Hinweises auf die Patenterteilung: **20.06.2018**
(21) Anmeldenummer: 13811467.3
(22) Anmeldetag: 18.12.2013
(51) Int. Cl.: G01C 21/32, G01C 21/26, G06F 17/30

(54) **VERFAHREN UND VORRICHTUNG ZUM VERWALTEN VON KARTENDATEN EINER DIGITALEN KARTE EINER NAVIGATIONSEINRICHTUNG**
METHOD AND DEVICE FOR MANAGING MAP DATA OF A DIGITAL MAP FOR A NAVIGATION APPARATUS
PROCÉDÉ ET DISPOSITIF POUR LA GESTION DES DONNÉES CARTOGRAPHIQUES D'UNE CARTE NUMÉRISÉE D'UN SYSTÈME DE NAVIGATION

(30) Priorität: 09.01.2013 DE 102013200181
(43) Veröffentlichungstag der Anmeldung: 18.11.2015
(73) Patentinhaber: Bayerische Motoren Werke Aktiengesellschaft, 80809 München (DE)
(72) Erfinder: RICHTER, Werner, 82008 Unterhaching (DE)
(86) Internationale Anmeldenummer: PCT/EP2013/077026
(87) Internationale Veröffentlichungsnummer: WO 2014/108281

(56) Entgegenhaltungen:
- DE-A1- 19 837 618
- DE-A1-102005 012 849

## Beschreibung

Die Erfindung betrifft ein Verfahren beziehungsweise eine Vorrichtung zum Verwalten von Kartendaten einer digitalen Karte einer Navigationseinrichtung.

Viele Fahrzeuge weisen eine fest installierte Navigationseinrichtung auf. Tritt bei einer Aktualisierung von Kartendaten dieser Navigationseinrichtung ein Fehler auf, so ist es häufig nötig, dass das Fahrzeug eine Werkstatt aufsuchen muss, da die Kartendaten beschädigt sind.

Die Offenlegungsschrift DE 198 37 618 A1 offenbart eine Terminaleinrichtung welche zum Aktualisieren von Kartendaten eingerichtet ist, wobei ältere Kartendaten nicht sofort gelöscht sondern in einem nicht verwendbaren Zustand gehalten werden.

Die Aufgabe, die der Erfindung zugrunde liegt, ist es einerseits ein Verfahren und andererseits eine korrespondierende Vorrichtung zum Verwalten von Kartendaten einer digitalen Karte einer Navigationseinrichtung zu schaffen, das beziehungsweise die dazu beiträgt, eine hohe Verfügbarkeit bei einem Betrieb der Navigationseinrichtung sicherzustellen.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus einerseits durch ein Verfahren und andererseits durch eine korrespondierende Vorrichtung zum Verwalten von Kartendaten einer digitalen Karte einer Navigationseinrichtung. Die Kartendaten weisen Originalkartendaten auf, die in einem Speicher gespeichert sind, der der Navigationseinrichtung zugeordnet ist. Die Originalkartendaten sind jeweils einer von mehreren Originalkartenkacheln zugeordnet. Den Originalkartenkacheln ist jeweils ein Gültigkeitsindikator zugeordnet. Bei einer Aktualisierung (Update) werden einer Updatekartenkachel zugehörige Updatekartendaten zugeordnet und dauerhaft gespeichert. Die jeweilige Updatekartenkachel ist zum Ersetzen einer zugeordneten Originalkartenkachel vorgesehen. Nach erfolgreichem Speichern der Updatekartendaten der jeweiligen Updatekartenkachel, insbesondere zeitnah zu dem erfolgreichen Speichern der Updatekartendaten der jeweiligen Updatekartenkachel, wird der Gültigkeitsindikator der zugeordneten Originalkartenkachel auf ungültig gesetzt. Im Betrieb der Navigationseinrichtung wird die jeweilige Originalkartenkachel geladen, wenn der ihr zugeordnete Gültigkeitsindikator gültig ist. Andernfalls wird die der jeweiligen Originalkartenkachel zugeordnete Updatekartenkachel geladen.

Indem bei einer Aktualisierung nur der Gültigkeitsindikator der Originalkartendaten verändert wird, bleiben die Originalkartendaten bis auf den Gültigkeitsindikator unberührt. Somit kann bei einem erkannten Fehler der Gültigkeitsindikator der Originalkartenkachel, die der fehlerhaften Updatekartenkachel zugeordnet ist, wieder auf gültig zurückgesetzt werden. Somit kann im Falle eines fehlerhaften Updatevorganges, wie beispielsweise durch Übertragung inkonsistenter oder fehlerhafter Daten, auf die Originalkartendaten zurückgegriffen werden und somit weiterhin konsistente Daten für die digitale Karte der Navigationseinrichtung bereitgestellt werden. Somit stehen der Navigationseinrichtung auch nach einer fehlerhaften Aktualisierung immer die Originalkartendaten zur Verfügung.

Beim Erstellen der Gültigkeitsindikatoren werden diese zuerst für alle Originalkartenkacheln auf gültig gesetzt. Somit werden, wenn noch keine Aktualisierungen vorhanden sind, die Originalkartenkacheln im Betrieb der Navigationseinrichtung geladen.

Damit eine Applikation jeweilige Updatekartendaten findet, ist es gegebenenfalls vorteilhaft, wenn der Speicherpfad der Updatekartendaten beispielsweise in der Applikation oder global in einer Datei, wie beispielsweise einer Initialisierungsdatei hinterlegt ist.

Sollte ein Fehler der jeweiligen Updatekartenkachel und/oder der Updatekartendaten der jeweiligen Updatekartenkachel erkannt werden, also sollte beispielsweise erkannt werden, dass die Aktualisierung inkonsistente Daten aufweist, so kann beispielsweise der Gültigkeitsindikator der jeweiligen Originalkartenkachel, die der jeweiligen Updatekartenkachel zugeordnet ist, wieder auf gültig gesetzt werden, falls er schon auf ungültig gesetzt wurde, damit anstelle der inkonsistenten Daten wieder die jeweiligen konsistenten Originalkartendaten geladen werden.

Gemäß einer vorteilhaften Ausgestaltung weist der Gültigkeitsindikator jeweils zusätzlich ein Datum auf. Zeitnah zu dem erfolgreichen Speichern der Updatekarten der jeweiligen Updatekartenkacheln wird das Datum des zugehörigen Gültigkeitsindikators angepasst.

Hierdurch kann bei einer Aktualisierung zusätzlich in dem Gültigkeitsindikator das Datum der Aktualisierung gespeichert werden.

Gemäß der Erfindung ist der jeweilige Gültigkeitsindikator in Kopfdaten (Header) der jeweiligen Originalkartenkacheln gespeichert. Hiermit kann der Gültigkeitsindikator auf einfache Weise integriert werden.

Gemäß der Erfindung sind die Originalkartendaten mittels Signatur geschützt und die jeweiligen Gültigkeitsindikatoren sind außerhalb der Signatur gespeichert.

Hierdurch beeinflusst der Gültigkeitsindikator eine Schutzfunktion der Originalkartendaten, wie beispielsweise die Signatur, nicht. Somit kann der Gültigkeitsindikator auch bei mit der Signatur geschützten Originalkartendaten verwendet werden.

Gemäß der Erfindung wird nach erfolgreichem Speichern der Updatekartendaten der jeweiligen Updatekartenkachel der Speicherpfad der Updatekartendaten der jeweiligen Updatekartenkachel in dem zugehörigen Gültigkeitsindikator gespeichert. Hierdurch kann einer Anwendung auf einfache Weise aufgezeigt werden, wo die Updatekartendaten der jeweiligen Updatekartenkachel zu finden sind. Zusätzlich kann der Speicherpfad auch global hinterlegt sein.

Ausführungsbeispiele der Erfindung sind anhand der schematischen Zeichnungen näher erläutert.

Es zeigen:
Figur 1 eine Steuervorrichtung und einen Speicher mit Kartendaten,
Figur 2 ein Aufbau der Kartendaten einer digitalen Karte einer Navigationseinrichtung und
Figur 3 ein Ablaufdiagramm für eine Aktualisierung der digitalen Karte.

Elemente gleicher Konstruktion oder Funktion sind figurenübergreifend mit den gleichen Bezugszeichen gekennzeichnet.

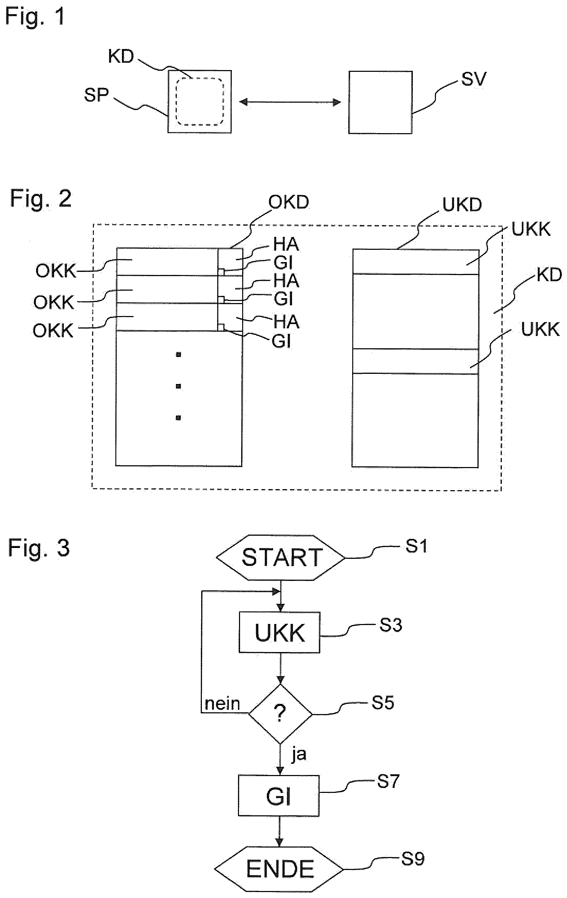

Figur 1 zeigt einen Speicher SP. Der Speicher SP kann eine Speichereinheit oder zwei oder mehrere Speichereinheiten aufweisen. In dem Speicher SP sind Kartendaten KD einer digitalen Karte einer Navigationseinrichtung gespeichert. Die Kartendaten KD können auf einer Speichereinheit und/oder verteilt auf mehrere Speichereinheiten des Speichers SP gespeichert sein.

Figur 1 zeigt des Weiteren eine Steuervorrichtung SV. Die Steuervorrichtung SV weist eine Recheneinheit, einen Daten- und Programmspeicher und eine Schnittstelle auf. Mittels der Schnittstelle kann die Steuervorrichtung SV Daten aus dem Speicher SP lesen und/oder Daten in den Speicher SP schreiben.

Die Steuervorrichtung SV kann auch als Vorrichtung zum Verwalten von Kartendaten einer digitalen Karte einer Navigationseinrichtung bezeichnet werden.

Figur 2 zeigt den Aufbau der Kartendaten KD einer digitalen Karte einer Navigationseinrichtung. Die Kartendaten KD weisen Originalkartendaten OKD auf. Die Originalkartendaten OKD sind jeweils einer von mehreren Originalkartenkacheln OKK zugeordnet. Die jeweilige Originalkartenkachel OKK weist Kopfdaten HA auf, die auch als Header bezeichnet werden. In dem Header HA der jeweiligen Originalkartenkachel OKK ist ein jeweiliger Gültigkeitsindikator GI gespeichert. Der jeweilige Gültigkeitsindikator GI wird initial auf gültig gesetzt. Er dient dazu, einer Applikation zu kennzeichnen, ob die jeweilige Originalkartenkachel OKK gültig ist, also geladen werden soll, oder nicht. Im Falle eines ungültigen Gültigkeitsindikators GI wird anstelle der Originalkartenkachel OKK eine Updatekartenkachel UKK geladen, die der jeweiligen Originalkartenkachel OKK zugeordnet ist.

Die Kartendaten KD weisen nach einer Aktualisierung außerdem Updatekartendaten UKD auf. Die Updatekartendaten UKD sind jeweils einer Updatekartenkachel UKK zugeordnet, wobei die jeweilige Updatekartenkachel UKK zum Ersetzen einer zugeordneten Originalkartenkachel OKK vorgesehen ist.

Somit kann die digitale Karte immer aus den Originalkartenkacheln OKK und/oder den Updatekartenkacheln UKK zusammengesetzt werden.

Zum Ausführen einer Aktualisierung ist in dem Daten- und Programmspeicher der Steuervorrichtung SV bevorzugt ein Programm abgespeichert, das während des Aktualisierungsvorgangs abgearbeitet werden kann. Das Programm ist im Folgenden anhand des Ablaufdiagramms der Figur 3 näher erläutert.

Das Programm, das in der Steuervorrichtung SV abgearbeitet wird, wird in einem Schritt S1 gestartet, in dem gegebenenfalls Variablen initialisiert werden können.

In einem Schritt S3 werden einer Updatekartenkachel UKK zugehörige Updatekartendaten UKD zugeordnet und dauerhaft gespeichert.

In einem Schritt S5 wird überprüft, ob die Updatekartendaten UKD der jeweilige Updatekartenkachel UKK erfolgreich gespeichert wurden. Dies kann beispielsweise mittels Checksummen ermittelt werden. Ist dies nicht der Fall, so wird die Bearbeitung in dem Schritt S3 fortgeführt. Ist dies der Fall so wird die Bearbeitung in einem Schritt S7 fortgeführt.

In dem Schritt S7 wird der Gültigkeitsindikator GI der Updatekartenkachel UKK zugeordneten Originalkartenkachel OKK auf ungültig gesetzt. Zusätzlich kann beispielsweise in dem Gültigkeitsindikator GI ein Datum gespeichert werden, wie zum Beispiel das Datum des Aktualisierungsvorgangs.

In einem Schritt S9 wird das Programm beendet und kann gegebenenfalls wieder in dem Schritt S1 gestartet werden. Der Speicherpfad der Updatekartendaten UKD der jeweiligen Updatekartenkachel UKK wird in dem Gültigkeitsindikator GI gespeichert. Zusätzlich kann der Speicherpfad auch global wie beispielsweise in einer Initialisierungsdatei gespeichert werden.

Auf diese Weise wird beispielsweise bei einer fehlerhaften Aktualisierung der jeweilige Gültigkeitsindikator GI nicht auf gültig gesetzt. Beim Betrieb der Navigationseinrichtung werden in diesem Fall beispielsweise anstelle der fehlerhaften Daten die jeweiligen Originalkartendaten OKD geladen um die digitale Karte zu erzeugen. Somit wird in diesem Fall der Betrieb der Navigationseinrichtung trotz fehlerhafter Aktualisierung ermöglicht.

Weisen die jeweiligen Updatekartendaten UKD der Updatekartenkachel UKK beispielsweise inkonsistente Daten auf, so kann der Gültigkeitsindikator GI der zugeordneten Originalkartenkachel OKK beispielsweise wieder auf gültig gesetzt werden. Somit wird auch in diesem Fall der Betrieb der Navigationseinrichtung ermöglicht, indem statt der inkonsistenten Updatekartendaten UKD die zugehörigen konsistenten Originalkartendaten OKD geladen werden. Die Originalkartendaten OKD sind mittels einer Signatur gesichert, wobei die Gültigkeitsindikatoren GI außerhalb der Signatur gespeichert sind. Auf diese Weise wirkt sich eine Veränderung der Gültigkeitsindikatoren GI nicht auf die Signatur der Originalkartendaten OKD aus.

### Bezugszeichenliste

- GI: Gültigkeitsindikator
- HA: Kopfdaten (Header)
- KD: Kartendaten
- SP: Speicher
- SV: Steuervorrichtung
- OKD: Originalkartendaten
- OKK: Originalkartenkachel
- UKD: Updatekartendaten
- UKK: Updatekartenkachel

## Patentansprüche

1. Verfahren zum Verwalten von Kartendaten (KD) einer digitalen Karte einer Navigationseinrichtung, bei dem
- die Kartendaten (KD) Originalkartendaten (OKD) aufweisen, die in einem Speicher (SP) gespeichert sind, der der Navigationseinrichtung zugeordnet ist,
- die Originalkartendaten (OKD) jeweils einer von mehreren Originalkartenkacheln (OKK) zugeordnet sind,
- den Originalkartenkacheln (OKK) jeweils ein Gültigkeitsindikator (GI) zugeordnet ist,
- bei einer Aktualisierung (Update) einer Updatekartenkachel (UKK) zugehörige Updatekartendaten (UKD) zugeordnet und dauerhaft gespeichert werden, wobei die jeweilige Updatekartenkachel (UKK) zum Ersetzen einer zugeordneten Originalkartenkachel (OKK) vorgesehen ist,
- nach erfolgreichem Speichern der Updatekartendaten (UKD) der jeweiligen Updatekartenkachel (UKK) der Gültigkeitsindikator (GI) der zugeordneten Originalkartenkachel (OKK), auf ungültig gesetzt wird,
- wobei im Betrieb der Navigationseinrichtung die jeweilige Originalkartenkachel (OKK) geladen wird, wenn der ihr zugeordnete Gültigkeitsindikator (GI) gültig ist und andernfalls die der jeweiligen Originalkartenkachel (OKK) zugeordnete Updatekartenkachel (UKK) geladen wird,
- wobei der jeweilige Gültigkeitsindikator (GI) in Kopfdaten (Header) (HA) der jeweiligen Originalkartenkachel (OKK) gespeichert ist, **dadurch gekennzeichnet, dass**
- nach dem erfolgreichen Speichern der Updatekartendaten (UKD) der jeweiligen Updatekartenkachel (UKK) der Speicherpfad der Updatekartendaten (UKD) der jeweiligen Updatekartenkachel (UKK) in dem zugehörigen Gültigkeitsindikator (GI) gespeichert wird,
- wobei die Originalkartendaten (OKD) mittels einer Signatur geschützt sind und die jeweiligen Gültigkeitsindikatoren (GI) außerhalb der Signatur gespeichert sind.

2. Verfahren nach Anspruch 1, bei dem der Gültigkeitsindikator (GI) jeweils zusätzlich ein Datum aufweist und bei dem zeitnah zu dem erfolgreichen Speichern der Updatekartendaten (UKD) der jeweiligen Updatekartenkachel (UKK) das Datum des zugehörigen Gültigkeitsindikators (GI) der Originalkartenkachel (OKK) angepasst wird.

3. Vorrichtung zum Verwalten von Kartendaten (KD) einer digitalen Karte einer Navigationseinrichtung, wobei die Vorrichtung dazu ausgebildet ist ein Verfahren nach einem der Ansprüche 1 bis 2 durchzuführen.

## Claims

1. A method for managing map data (KD) of a digital map of a navigation apparatus, in which
- the map data (KD) comprise original map data (OKD), which are stored in a memory (SP), which is assigned to the navigation apparatus,
- the original map data (OKD) are in each case assigned to one of a plurality of original map tiles (OKK),
- the original map tiles (OKK) are each assigned a validity indicator (GI),
- in the event of an update of an update map tile (UKK), associated update map data (UKD) are assigned and permanently stored, wherein the particular update map tile (UKK) is provided to replace an assigned original map tile (OKK),
- after the update map data (UKD) of the particular update map tile (UKK) have been successfully stored, the validity indicator (GI) of the assigned original map tile (OKK) is setto invalid,
- wherein, during operation of the navigation apparatus, the particular original map tile (OKK) is loaded if the validity indicator (GI) assigned thereto is valid, and otherwise the update map tile (UKK) assigned to the particular original map tile (OKK) is loaded,
- wherein the particular validity indicator (GI) is stored in header data (HA) of the particular original map tile (OKK),
**characterised in that**
- after the update map data (UKD) of the particular update map tile (UKK) has been successfully stored, the memory path of the update map data (UKD) of the particular update map tile (UKK) is stored in the associated validity indicator (GI),
- wherein the original map data (OKD) are protected by means of a signature and the particular validity indicators (GI) are stored outside the signature.

2. A method according to claim 1, in which the validity indicator (GI) in each case additionally comprises a date, and in which the date of the associated validity indicator (GI) of the original map tile (OKK) is adapted shortly after the successful storage of the update map data (UKD) of the particular update map tile (UKK).

3. A device for managing map data (KD) of a digital map of a navigation apparatus, wherein the device is designed to carry out a method according to either one of claims 1 or 2.

## Revendications

1. Procédé de gestion de données cartographiques (KD) d'une carte numérique d'une installation de navigation selon lequel :
- les données cartographiques (KD) comportent des données cartographiques originales (OKD) enregistrées dans une mémoire (SP) associée à l'installation de navigation,
- les données cartographiques originales (OKD) sont associées respectivement à l'une des cases cartographiques originales (OKK),
- un indicateur de validité (GI) est associé chaque fois aux cases cartographiques originales (OKK),
- lors d'une actualisation (mise à jour) d'une case de carte de mise à jour (UKK), des données cartographiques mises à jour correspondantes (UKD) sont associées et sont mémorisées de manière permanente, la boîte cartographique mise à jour respective (UKK) étant prévue pour remplacer une boîte cartographique originale (OKK) associée,
- après l'enregistrement réussi des données cartographiques mises à jour (UKD) de la boîte cartographique mise à jour respective (UKK), l'indicateur de validité (GI) de la boîte cartographique originale (OKK), associé, est invalidé,
- en fonctionnement de l'installation de navigation, la boîte cartographique originale respective (OKK) est chargée si son indicateur de validité associé (GI) est valable et dans le cas contraire on charge la boîte cartographie mise à jour (UKK) associée à cette boîte cartographique originale (OKK) respective,
- on mémorise l'indicateur de validité respective (GI) dans les données d'entête (HA) de la boîte cartographique originale respective (OKK),
procédé **caractérisé en ce qu'**
après avoir enregistré avec succès les données cartographiques mises à jour (UKD) de la boîte cartographique mise à jour respective (UKK), on mémorise le chemin vers les données cartographiques mises à jour (UKD) de la boîte cartographique mise à jour respective (UKK) dans l'indicateur de validité correspondant (GI),
- on protège les données cartographiques originales (OKD) à l'aide d'une signature et on mémorise à l'extérieur de la signature les indicateurs de validité respectifs (GI).

2. Procédé selon la revendication 1,
selon lequel l'indicateur de validité (GI) comporte chaque fois en plus une date et près de l'enregistrement réussi des données cartographiques mises à jour (UKD) de la boîte cartographique mise à jour respective (UKK), on adapte la date de l'indicateur de validité correspondant (GI) de la boîte cartographique originale (OKK).

3. Dispositif de gestion de données cartographiques (KD) d'une carte numérique d'une installation de navigation, ce dispositif étant réalisé pour exécuter un procédé selon l'une des revendications 1 à 2.
